## Europäisches Patentamt

## European Patent Office

## Office européen des brevets

(19)

(11) Veröffentlichungsnummer: **0 362 630**
**A1**

# EUROPÄISCHE PATENTANMELDUNG

(21) Anmeldenummer: 89117470.8

(22) Anmeldetag: 21.09.89

(51) Int. Cl.5: **G01D 5/48**

(30) Priorität: 21.09.88 DE 3832097

(43) Veröffentlichungstag der Anmeldung:
**11.04.90 Patentblatt 90/15**

(84) Benannte Vertragsstaaten:
**CH FR GB LI SE**

(71) Anmelder: **Theil, Thomas**
**Alte-Traubinger-Strasse 5**
**D-8133 Feldafing(DE)**

(72) Erfinder: **Theil, Thomas**
**Alte-Traubinger-Strasse 5**
**D-8133 Feldafing(DE)**

(74) Vertreter: **Strasser, Wolfgang, Dipl.-Phys et al**
**Patentanwälte Strohschänk, Uri & Strasser**
**Innere Wiener Strasse 8**
**D-8000 München 80(DE)**

(54) **Messanordnung.**

(57) Bei einer Meßanordnung für den Abstand zwischen einer Markierung (32) auf einem verschiebbaren Markierungsträger (30) und einer Referenzlinie sind zur Erzielung einer hohen Auflösung und einer niederen Abtastfrequenz auf der Innenseite des Röhrenbodens (9) einer Elektronenstrahlröhre (1) wenigstens zwei einen Meßspalt (20) begrenzende Elektroden (17, 18) vorgesehen. Die Ablenkeinheit (6) der Elektronenstrahlröhre wird so angesteuert, daß der in Querrichtung den Meßspalt überdeckende Auftrefffleck (7) des Elektronenstrahls (4) auf dem Röhrenboden ohne äußere Beeinflussung so am Meßspalt entlangläuft, daß die Differenz der über die beiden Elektroden abfließenden Ströme einen vorgebbaren Wert besitzt. Der Markierungsträger übt auf den Elektronenstrahl einen Einfluß aus, der sich bei Verschiebung des Markierungsträgers ändert und durch den der Auftrefffleck quer zur Längsrichtung des Meßspaltes verschoben wird. Durch Mitführen des Auftrefffleeks mit dem Markierungsträger kann dieser Einfluß konstant gehalten werden. Das hierfür erforderliche Ansteuersignal für die Ablenkeinheit liefert ein Maß für den gesuchten Abstand.

Fig. 1

## Meßanordnung

Die Erfindung betrifft eine Meßanordnung der im Oberbegriff des Anspruches 1 genannten Art.

Eine derartige Meßanordnung ist beispielsweise aus der DE-OS 36 08 884 bekannt. Die dort verwendete Elektronenstrahlröhre weist an ihrem Röhrenboden eine Phosporschicht auf, mit deren Hilfe die Energie des Elektronenstrahls in Licht umgewandelt wird, das von einem auf der Außenseite des Röhrenbodens erscheinenden Leuchtfleck ausgeht. Mit diesem Licht wird ein dem Röhrenboden unmittelbar gegenüberliegender Markierungsträger beleuchtet, der den verschiebbaren Körper bildet bzw. mit diesem starr verbunden ist.

Durch Ansteuerung der Ablenkeinheit der Elektronenstrahlröhre kann der durch diese Beleuchtung auf dem Markierungsträger entstehende Abtastfleck unabhängig von einer Relativbewegung zwischen Markierungsträger und Elektronenstrahlröhre über den Markierungsträger bewegt werden, wobei er durch die dort vorgesehene Markierung bzw. Markierungen ortsabhängig moduliert wird. Das modulierte Licht gelangt vorzugsweise so auf einen fotoelektrischen Empfänger, daß ein Ausgangssignal mit einem Differentialverhalten entsteht, das immer dann einen vorgebbaren Wert, beispielsweise einen Nullpegel durchläuft wenn der Abtastfleck bezüglich einer Markierung eine genau definierte und exakt reproduzierbare lage einnimmt. Diese Lage ergibt sich aus der oder den zum Zeitpunkt eines solchen Nulldurchgangs an der Ablenkeinheit der Elektronenstrahlröhre anliegenden Ablenkspannungen, die gemäß dem Stand der Technik vorzugsweise mit Hilfe eines Digital/Analog-Wandlers aus von einem Rechner bzw. einer Steuereinheit vorgegebenen Digitalwörtern abgeleitet werden. Die relative Lage einer einen bestimmten Nulldurchgang erzeugenden Markierung bezüglich einer gewählten Referenzlinie wird dann durch das oder die im Augenblick dieses Nulldurchganges erzeugten Digitalwörter beschrieben, die als entsprechende Meßwerte ausgelesen und angezeigt bzw. einer weiteren Signalverarbeitung zugeführt werden können.

Wesentliche Vorteile einer solchen Anordnung sind neben der hohen Meßgenauigkeit und Auflösung die nahezu trägheitslose Ablenkung der Elektronenstrahlröhre, die eine sehr hohe Abtastfrequenz erlaubt, sowie die Möglichkeit, den Elektronenstrahl in zwei zueinander senkrechten Richtungen abzulenken und somit den Abtastfleck längs beliebig geformter Bahnen zu verschieben bzw. hin- und herzubewegen.

Andererseits besitzt die bekannte Anordnung eine Reihe von Nachteilen bzw. Begrenzungen. So muß zunächst die im Elektronenstrahl der Röhre enthaltene Energie in Licht umgewandelt werden, aus dem der fotoelektrische Empfänger dann wieder ein elektrisches Signal erzeugt. Dies kostet Energie und erfordert vor allem die Verwendung einer Hochspannung zur Beschleunigung des Elektronenstrahls, da die Leuchtkraft des Phosphors von der kinetischen Energie der auftreffenden Elektronen abhängt. Außerdem verschlechtert die zweifache Umwandlung der das Signal repräsentierenden Energieform den Signal/Rausch-Abstand.

Auch die Körnung der Phosphorschicht verursacht ein zusätzliches Rauschen, das auf den eigentlich "glatten" Verlauf des Empfänger-Ausgangssignals positive und negative Spitzen aufprägt, die zu Verschiebungen der Nulldurchgänge und damit zu einer nachteiligen Begrenzung des Auflösungsvermögens führen.

Besonders gravierend ist die Tatsache, daß zur Erzielung eines differentiellen Empfänger-Ausgangssignals und damit einer Auflösung im Mikrometerbereich der Markierungsträger durch eine ständige Bewegung des Abtastflecks über eine Strecke von mehreren Millimetern hinweg abgetastet werden muß. Diese Abtastbewegung muß auch dann aufrechterhalten bleiben, wenn sich der Markierungsträger bezüglich der Elektronenstrahlröhre verschiebt. Es sind hier also sehr hohe Abtastfrequenzen erforderlich, wodurch Verstärker mit hoher Bandbreite und sehr schnelle Digital/Analog-Wandler verwendet werden müssen, die entsprechend hohe Kosten verursachen.

Außerdem führt der breite Abstrahlwinkel des Leuchtflecks dann, wenn in der Umgebung der Meßanordnung spiegelnde Objekte vorhanden sind, zu zusätzlichen Fehlern. Auch ist die Meßanordnung deswegen, weil Licht im sichtbaren Spektralbereich verwendet wird, anfällig für Störungen durch Umgebungslicht.

Schließlich ergibt sich eine ungünstige Einbaugröße, weil Sender (Elektronenstrahlröhre) und fotoelektrischer Empfänger voneinander getrennt angeordnet werden müssen.

Demgegenüber liegt der Erfindung die Aufgabe zugrunde, eine Meßanordnung der eingangs genannten Art zu schaffen, die bei zumindest gleicher Meßgenauigkeit ein verbessertes Auflösungsvermögen besitzt, ohne daß hierfür extrem große Abtastfrequenzen erforderlich sind.

Zur Lösung dieser Aufgabe sieht die Erfindung die im Anspruch 1 zusammengefaßten Merkmale vor.

Bei der erfindungsgemäßen Vorrichtung fällt die Aufteilung in Sender und Empfänger mit dazwischen angeordneter Modulationseinrichtung und damit auch die zweimalige Umsetzung der als Signalträger dienenden Energieform weg. Statt dessen wird hier die Bahn des Elektronenstrahls im Inneren der Elektronenstrahlröhre und damit die Lage des Auftrefffflecks auf dem Röhrenboden durch verschiedene Bereiche des Markierungsträgers in unterschiedlicher Weise beeinflußt, so daß eine Verschiebung bzw. Lageänderung des Markierungsträgers bezüglich des Röhrenbodens zu einer Verschiebung des Auftrefffflecks des Elektronenstrahls auf dem Röhrenboden führt, wenn keine zusätzlichen Maßnahmen ergriffen werden. Um die durch den Markierungsträger induzierte Verschiebung des Auftrefffflecks messend erfassen bzw. kompensieren zu können, sind an der Innenseite des Röhrenbodens wenigstens zwei elektrisch voneinander getrennte Elektroden angeordnet, die zwischen sich einen schmalen, langgestreckten Meßspalt einschließen, dessen Verlauf an die Form der zu erfassenden Bewegung des Markierungsträgers angepaßt ist. So ist der Meßspalt für die Überwachung einer Linearbewegung geradlinig und für die Erfassung von Winkelbewegungen kreisbogenförmig bzw. kreisförmig ausgebildet.

Die Ablenkplatten der Elektronenstrahlröhre werden vom Grundsatz her so angesteuert, daß sich der Auftrefffleck des Elektronenstrahls dann, wenn die Einwirkungsmöglichkeiten des Markierungsträgers unterbunden werden, mit seinem Zentrum in etwa auf der Mitte des Meßspaltes in dessen Längsrichtung bewegt. Genauer gesagt wird der Auftrefffleck so gesteuert, daß die Differenz der vom Elektronenstrahl erzeugten Ströme, die über die beiden den Meßspalt begrenzenden Elektroden abfließen, gleich einem vorgebbaren Wert, vorzugsweise gleich Null ist.

Diese Anordnung hat den Vorteil, daß die zur Messung benötigten Signale immer in elektrischer Form vorliegen, so daß die beim Stand der Technik beim Wechsel der Energieform entstehenden Rauschanteile hier nicht auftreten. Insbesondere wird keine Phosphorschicht am Röhrenboden benötigt, so daß deren das Meßergebnis verschlechternde Körnigkeit entfällt.

Da die kinetische Energie der sich im Elektronenstrahl bewegenden Elektronen keine Rolle mehr spielt, kann mit wesentlich niedrigeren Beschleunigungsspannungen gearbeitet werden. Eine Beeinträchtigung der Messung durch Fremdlicht ist nicht mehr möglich, so daß eine optische Abschirmung entfallen kann. Verschmutzungen durch Staub, Feuchtigkeit oder dergleichen sind nicht störend.

Die Einwirkungsmöglichkeiten des Markierungsträgers auf den Elektronenstrahl sind so gestaltet, daß er den Auftrefffleck auf dem Röhrenboden nur quer zur Längsrichtung des Meßspaltes nicht aber in dessen Längsrichtung verschieben kann. Vorzugsweise geschieht dies dadurch, daß der Markierungsträger wenigstens eine Markierung aufweist, die durch eine Grenzfläche gebildet wird, an der zwei magnetische Bereiche, deren Längsrichtung sich in Richtung des Meßspaltes erstreckt, mit ihren beiden magnetischen Nordpolen bzw. mit ihren beiden magnetischen Südpolen aneinanderstoßen. Von dieser Grenzfläche, an der das magnetische Feld verschwindet, geht in Verschiebungsrichtung des Markierungsträgers und damit in Längsrichtung des Spaltes jeweils ein Magnetfeld aus, das mit zunehmendem Abstand von der Grenzfläche größer wird. Dies hat zur Folge, daß der Auftrefffleck des Elektronenstrahls dann, wenn er sich unmittelbar auf der durch die Projektion dieser Grenzfläche auf den Röhrenboden gebildeten Markierung befindet, in Querrichtung zum Meßspalt nicht abgelenkt wird, und daß diese Ablenkung um so mehr zunimmt, je weiter der Auftrefffleck von einer solchen Markierung entfernt ist.

Wird der Auftrefffleck quer zur Längsrichtung des Meßspaltes verschoben, so nimmt der über die eine der beiden Elektroden abfließende Strom zu während der über die andere Elektrode abfließende Strom abnimmt. Die Differenz der beiden Ströme wächst also sehr schnell zu einem positiven bzw. negativen Maximalwert hin an, wobei das Vorzeichen des Differenzstromes bzw. einer daraus abgeleiteten Spannung von der Verschiebungsrichtung des Markierungsträgers abhängt. Ist bekannt, ob es sich bei der die betreffende Markierung erzeugenden Grenzfläche um eine Nordpol/Nordpol- oder eine Südpol/Südpol-Grenzfläche handelt, so kann aus dem Vorzeichen des bei der Verschiebung entstehenden Differenzstromes eindeutig auf die Verschiebungsrichtung geschlossen werden. Die zweite Markierungsspur, die beim Stand der Technik entsprechenden inkrementalen Verschiebungs-Meßwertgebern zur Erkennung der Verschiebungsrichtung erforderlich ist, wird bei der erfindungsgemäßen Vorrichtung nicht benötigt.

Ist die Richtung geklärt, in der sich der Markierungsträger verschiebt, so wird der Auftrefffleck des Elektronenstrahls wieder in der Weise mit der Markierung "zur Deckung gebracht", daß die Differenz der über die beiden Elektroden abfließenden Ströme gleich Null wird.

Es sei ausdrücklich darauf hingewiesen, daß dieser Null-Abgleich nicht durch eine von den Ablenkplatten her erfolgende Verschiebung des Auftrefffflecks quer zur Längsrichtung des Meßspaltes sondern dadurch erfolgt, daß der Auftrefffleck in Längsrichtung des Meßspaltes der Markierung so lange nachgeführt wird, bis der Einfluß des Markierungsträgers wieder gleich dem Einfluß in der Ausgangssituation, vorzugsweise also gleich Null ist. Um den Auftrefffleck in der eben beschriebenen Weise mit der sich verschiebenden Markierung mitführen zu können, muß der die Ablenkplatten ansteuernde Rechner ständig neue Ablenkspannungen, vorzugsweise in Form von Digitalworten erzeugen, die gleichzeitig ein Maß für die momentane Stellung des Markierungsträgers liefern.

Bei diesem Meßverfahren ist die Maximalgeschwindigkeit, mit der der Auftrefffleck in Richtung des Meßspaltes stetig verschoben werden muß, gleich oder allenfalls nur unwesentlich größer als die maximale Verschiebungsgeschwindigkeit des Maßstabes. Die beim Stand der Technik erforderliche zusätzliche Abtastbewegung entfällt, da sich hier das Differentialverhalten des Ausgangssignals aus der Differenzbildung zwischen den über die beiden Elektroden abfließenden Strömen ergibt. Somit kann bei der erfindungsgemäßen Anordnung selbst dann, wenn sehr schnelle Bewegungen des Markierungsträgers verfolgt werden sollen, mit vergleichsweise niederen Abtastfrequenzen gearbeitet werden, was den schaltungstechnischen Aufwand für die Ablenkverstärker und die diese Ablenkverstärker ansteuernden Digital/Analog-Wandler wesentlich vermindert.

Da die Herstellung der Elektroden z.B. durch Aufdampfen einer Aluminiumschicht auf die Innenseite des Röhrenbodens mit nachfolgendem Ausätzen des Meßspaltes und anderer die leitenden Strukturen voneinander trennender Bereiche mit Hilfe der bekannten fotolithographischen Verfahren durchgeführt werden kann, kann die Formgebung der Elektroden mit hoher Genauigkeit und nahezu beliebiger Gestalt erfolgen. Es können auch zusätzliche Spuren für die Eichung des Ablenksystems einschließlich des oder der Digital/Analog-Wandler und des bzw. der Ablenkverstärker vorgesehen werden.

Da das Gesamtsystem einer Brückenschaltung im Kompensationsverfahren entspricht, da das Ausgangssignal immer auf einen festen Wert, vorzugsweise auf Null geregelt wird, wirken sich Fehler der Empfangselektronik nur in sehr geringem Maße aus.

Die Nachführweite, über die hinweg der Auftrefffleck des Elektronenstrahls mit einer sich geradlinig am Röhrenboden vorbei verschiebenden Markierung mitbewegt werden kann, ist durch die Abmessungen der Elektronenstrahlröhre begrenzt. Sollen daher größere Verschiebungsweiten messend verfolgt werden, so muß der Markierungsträger mehrere Markierungen umfassen, deren Abstand so klein gewählt ist, daß spätestens dann, wenn die eine Markierung den im folgenden als Meßfenster bezeichneten Verschiebungsbereich des Abtastfleckes verläßt, die nächste Markierung in dieses Meßfenster eingetreten ist.

Wird die Anordnung als Winkelgeber verwendet, bei dem die Drehachse, um die herum die Winkelverschiebungen stattfinden, mit dem Mittelpunkt des kreisförmigen Meßspalts zusammenfällt, so existiert eine derartige Beschränkung nicht. Hier genügt im Prinzip eine einzige Markierung, deren Winkelbewegungen mit dem Auftrefffleck ständig mitverfolgt werden können. Da die Markierung aber, wie oben erwähnt, durch das Aneinanderstoßen von zwei Nord- bzw. zwei Südpolen von zwei magnetischen Bereichen erzeugt wird, ergibt sich hier notwendigerweise eine zweite Markierung, an der die beiden anderen Pole der beiden magnetischen Bereiche aneinanderangrenzen.

Zwar muß die erfindungsgemäße Anordnung gegen äußere Magnetfelder abgeschirmt werden, jedoch nur gegen solche Magnetfelder, die sich quer zur Längsachse der Elektronenstrahlröhre erstrecken. Dies kann auf einfache Weise mit Hilfe eines Mu-Metallschirms geschehen. Magnetfelder in Längsrichtung der Elektronenstrahlröhre haben dagegen keinen Einfluß auf die Meßgenauigkeit und das Auflösungsvermögen der Anordnung.

Bildet man die magnetischen Bereiche am Markierungsträger nicht mit Hilfe von Permanentmagneten sondern mit Hilfe eines oder mehrerer Elektromagneten aus, die alle vom gleichen Strom durchflossen werden, so kann durch Abschalten bzw. Umpolen dieses Stromes das Vorhandensein von äußeren Störfeldern erkannt, messend erfaßt und somit auch kompensiert werden.

Dadurch, daß die Elektronenstrahlröhre gleichzeitig Sender und Empfänger der Meßanordnung ist, können alle Teile der Meßvorrichtung auf einer Seite des Markierungsträgers angeordnet werden. Dies führt zu einer verminderten Baugröße und erleichtert die Abschirmung. Die Anordnung ist gegen Entfernungsänderungen zwischen dem Röhrenboden und dem Markierungsträger und gegen seitliche Parallelverschiebungen der Röhre zum Markierungsträger unempfindlich. Lediglich sich während des Meßbetriebs verändernde Verkippungen müssen vermieden werden.

Die Anordnung kann entweder als inkrementaler Meßwertgeber oder als absolute Meßvorrichtung verwendet werden. Im letzteren Fall werden die Abstände zwischen den Markierungen in einem Eichlauf, der auch zwischen den Meßvorgängen immer wieder wiederholt werden kann, mit der Vorrichtung selbst ausgemessen. In diesem Fall muß der Abstand zwischen den Markierungen so klein gewählt werden, daß sich in jeder Stellung des Markierungsträgers immer wenigstens zwei Markierungen innerhalb des Meßfensters befinden.

Der Markierungsträger muß nicht notwendigerweise vor dem Röhrenboden angeordnet werden. Im Rahmen der Erfindung ist jede Positionierung bezüglich der Elektronenstrahlröhre möglich, die eine Beeinflussung des Elektronenstrahls zwischen der Ablenkeinheit und dem Röhrenboden ermöglicht. Beeinflußt man den Elektronenstrahl unmittelbar hinter der Ablenkeinheit, so wird bei gleich starker Einwirkung eine entsprechend größere Auslenkung am Röhrenboden erreicht. Dieser Effekt kann zur Steigerung des Auflösungsvermögens eingesetzt werden.

Die Beeinflussung des Elektronenstrahls kann statt mit Magnetfeldern auch mit Hilfe von elektrostatischen Feldern oder elektrischen Wechselfeldern erfolgen. Zu diesem Zweck können auf dem Markierungsträger in Richtung seiner Verschiebung aufeinanderfolgende Bereiche mit abwechselnd elektrisch positiver und elektrisch negativer Polung bezüglich einer in der Nähe der Elektronenstrahlröhre angeordneten Masseplatte vorgesehen sein. Das oben für Magnetfelder Gesagte gilt in gleicher Weise bzw. sinngemäß auch für die elektrischen Felder, die den Vorteil besitzen, daß sie eine schnellere Um- und Abschaltung ermöglichen.

Vorteilhafte Weiterbildungen der erfindungsgemäßen Meßanordnung sind in den Unteransprüchen niedergelegt.

Die Erfindung wird im folgenden anhand von Ausführungsbeispielen unter Bezugnahme auf die Zeichnung beschrieben; in dieser zeigen:

Fig. 1 eine schematische, teilweise perspektivische Darstellung der Meßanordnung gemäß der Erfindung,

Fig. 2 eine Draufsicht auf den Röhrenboden der Anordnung aus Fig. 1 vom Markierungsträger her gesehen,

Fig. 3 in vergrößertem Maßstab eine der Fig. 2 entsprechende Draufsicht auf den Röhrenboden mit einer abgewandelten Elektroden-Konfiguration,

Fig. 4 eine der Fig. 3 entsprechende Draufsicht auf den Röhrenboden für eine als Winkelgeber ausgebildete erfindungsgemäße Meßanordnung,

Fig. 5 eine perspektivische Ansicht des Markierungsträgers und eines Elektromagneten einer weiteren Ausführungsform, wobei die Elektronenstrahlröhre nur mit gestrichelten Linien angedeutet ist,

Fig. 6 eine der Fig. 2 entsprechende Ansicht des Röhrenbodens mit einem Markierungsträger gemäß Fig. 5, und

Fig. 7 das Ausgangssignal, das bei einer Anordnung gemäß Fig. 6 am Ausgang des Differenzverstärkers entsteht, der die vom Elektronenstrahl erzeugten und über die beiden Elektroden abgeleiteten Ströme voneinander subtrahiert.

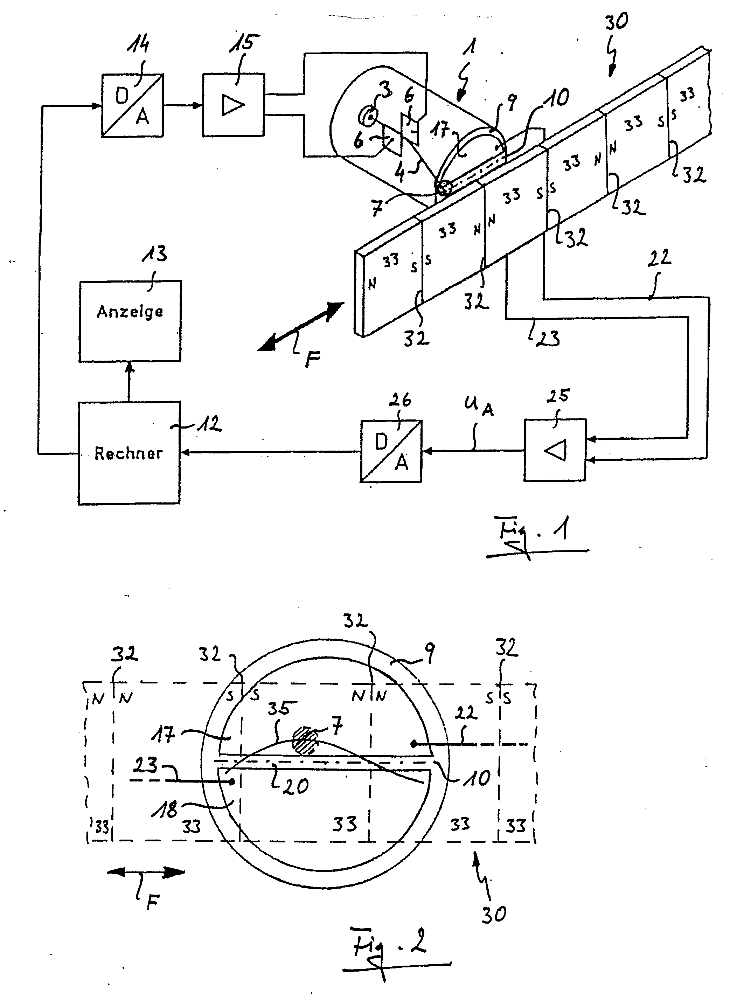

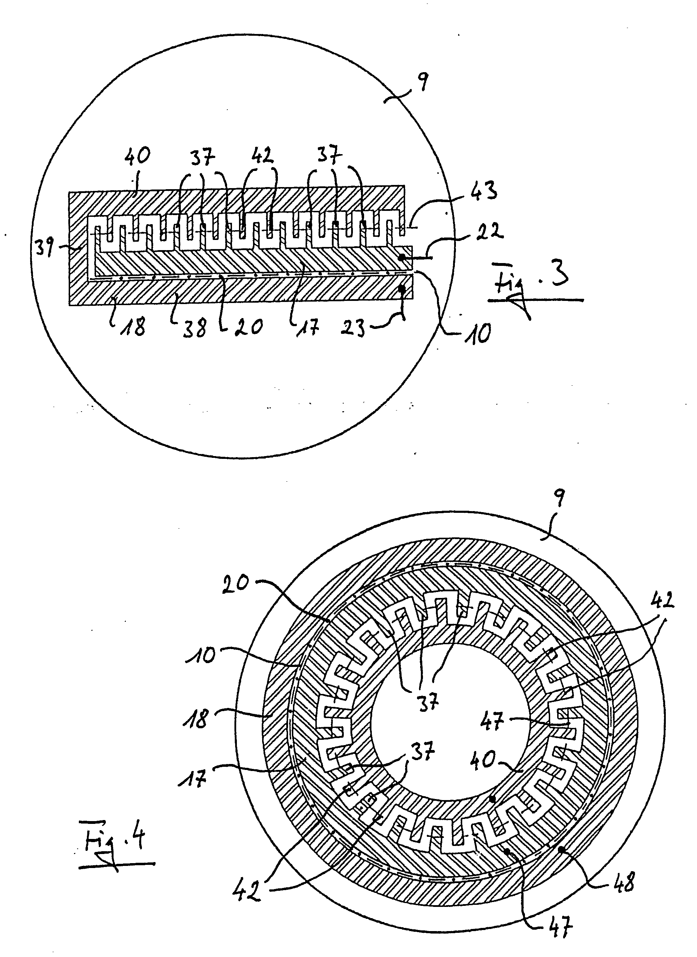

Wie man den Fig. 1 und 2 entnimmt, umfaßt eine erfindungsgemäße Meßanordnung eine Elektronenstrahlröhre 1, deren nur schematisch dargestellte Elektronenkanone 3 einen mit Hilfe eines nicht dargestellten Wehnelt-Zylinders fokussierten Elektronenstrahl 4 erzeugt, der in bekannter Weise mit Hilfe von elektrostatischen Ablenkplatten in zwei zueinander senkrechten Richtungen so abgelenkt werden kann, daß der Auftrefffleck 7 des Elektronenstrahls 4 auf dem Röhrenboden 9 eine Bahn beschreibt, deren Verlauf durch die an die Ablenkplatten angelegten Spannungen vorgebbar ist.

Der Einfachheit halber sind in Fig. 1 nur die beiden Ablenkplatten 6 dargestellt, die erforderlich sind, um den Auftrefffleck 7 in Richtung der strichpunktierten Linie 10, die im folgenden als X-Richtung bezeichnet wird, hinund herzubewegen. Selbstverständlich sind aber auch die nicht dargestellten Ablenkplatten vorhanden, mit deren Hilfe der Auftrefffleck 7 in der zur Linie 10 senkrechten Richtung, die im folgenden als Y-Richtung bezeichnet wird, ausgelenkt bzw. gesteuert werden kann.

Die für die Ablenkung des Elektronenstrahls 4 erforderlichen Spannungen werden auf folgende Weise erzeugt:

Ein Rechner 12 erzeugt zur Ansteuerung der Ablenkplatten 6 eine Vielzahl von verschiedenen Digitalworten, die einem Digital/Analog-Wandler 14 zugeführt werden, der jedes dieser Digitalworte in eine Analogspannung umwandelt, die über einen Ablenkverstärker 15 an die Ablenkplatten 6 gelegt wird. Jedes dieser Digitalworte erzeugt somit eine definierte Auslenkung des Elektronenstrahls 4 bzw. eine definierte Verschiebung seines Auftrefffleck 7 in X-Richtung.

In entsprechender Weise gibt der Rechner 12 einen zweiten Satz von Digitalworten an einen nicht dargestellten Digital/Analog-Wandler, der sie ebenfalls in Analogspannungen umwandelt, die über einen nicht dargestellten Ablenkverstärker an die zur Ablenkung in Y-Richtung dienenden Ablenkplatten gelegt werden.

Bei dem in den Fig. 1 und 2 dargestellten Ausführungsbeispiel, bei dem die erfindungsgemäße Meßanordnung zur Abstandserfassung bei geradlinigen Verschiebungen dient, wird der Auftrefffleck 7 durch die vom Rechner 12 abgegebenen Signale nur in X-Richtung hin- und herbewegt. In Y-Richtung steuert der Rechner 12 den Auftrefffleck 7 so, daß er sich dann, wenn von außen her keine weiteren Ablenkkräfte auf den Elektronenstrahl 4 einwirken, in etwa längs der strichpunktierten Linie 10 bewegt. Das exakte Ansteuerkriterium in Y-Richtung für den Fall, daß von außen keine zusätzlichen Ablenkkräfte auftreten, wird weiter unten genauer erläutert.

Wie man insbesondere der Fig. 2 entnimmt, sind am Röhrenboden 9 der Elektronenstrahlröhre 1 auf der Innenseite zwei elektrisch leitende Elektroden 17, 18 vorgesehen, die durch einen schmalen Meßspalt 20 geometrisch und elektrisch voneinander getrennt sind. Der Meßspalt 20 ist so angeordnet, daß er sich in X-Richtung erstreckt und die strichpunktierte Linie 10 seine Längs-Mittellinie bildet.

Die Abmessung des Auftrefffleck 7 in Y-Richtung, d.h. senkrecht zum Meßspalt 20 ist größer als die Breite des Meßspaltes, so daß dann, wenn die Mitte des Auftreffflecks 7 in Y-Richtung nicht zu weit von der Linie 10 entfernt ist, ein Teil der im Elektronenstrahl 4 von der Elektronenkanone 3 zum Röhrenboden 9 hin beschleunigten Elektronen auf die Elektrode 17 und der andere Teil auf die Elektrode 18 auftrifft bzw. vom Meßspalt 20 zu einer dieser Elektroden hin abfließt. Die beiden Elektroden 17, 18 sind über schematisch dargestellte Anschlußverbindungen 22, 23 an einen Differenzverstärker 25 angeschlossen, der an seinem Ausgang eine Signalspannung $U_A$ erzeugt, deren Absolutbetrag ein Maß für die Differenz $I_{17} - I_{18}$ der über die Elektroden 17, 18 abfließenden Ströme ist, und deren Vorzeichen angibt, ob der Abtastfleck 7 mehr zur Elektrode 17, d.h. in den Fig. 1 und 2 mehr nach oben, oder mehr zur Elektrode 18, d.h. in den Fig. 1 und 2 mehr nach unten, von der Linie 10 weg ausgelenkt wird.

Die Ausgangsspannung $U_A$ des Differenzverstärkers 25 wird mit Hilfe eines Analog/Digital-Wandlers 26 digitalisiert und dem Rechner 12 zugeführt.

Das oben erwähnte, genaue Ansteuerungskriterium in Y-Richtung beinhaltet, daß der Rechner 12 die Digital-Worte für die nicht dargestellten Ablenkplatten in Y-Richtung immer so erzeugt, daß dann, wenn keine von außen einwirkenden Ablenkkräfte für den Elektronenstrahl 4 vorhanden sind, der Abtastfleck 7 bei Auslenkung in Y-Richtung so längs des Meßspaltes 20 geführt wird, daß die Differenz der Ströme $I_{17} - I_{18}$ ständig gleich Null ist. Allerdings können die zur Einhaltung dieser Bedingung erforderlichen Digital-Worte nur dann ermittelt bzw. beim Auftreten von Abweichungen korrigiert werden, wenn sich kein Markierungsträger 30 in der in Fig. 1 dargestellten Weise in der Nähe des Röhrenbodens 9 befindet. Die von einem solchen Markierungsträger 30 ausgehende Beeinflussung des Elektronenstrahls 4 wird durch den Rechner 12 nicht durch eine Änderung der Ablenkung des Elektronenstrahls in Y-Richtung kompensiert, so daß die Anordnung in Fig. 1 in diesem Sinn keine Regelschleife bildet.

Daher können in den Fällen, in denen, wie in den Fig. 1 und 2 dargestellt, die erfindungsgemäße Meßanordnung zur messenden Verfolgung der geradlinigen Verschiebung wenigstens einer auf einem Körper angebrachten Markierung in Bezug auf eine Referenzmarkierung dienen soll, so daß der Meßspalt 20 zwischen den beiden Elektroden 17 und 18 geradlinig ausgebildet ist, die in Fig. 1 nicht dargestellten Ablenkplatten für eine Ablenkung des Elektronenstrahls 4 in Y-Richtung durch eine Korrekturspule ersetzt werden, durch die man einen Strom fließen läßt, der in bekannter Weise so eingestellt wird, daß die durch das Magnetfeld dieser Spule erzeugte Strahldrehung dazu führt, daß der Auftrefffleck 7 des nur über die X-Ablenkplatten 6 angesteurten Elektronenstrahls 4 sich exakt in der oben beschriebenen Weise längs des Meßspaltes 20 bewegt, wenn ansonsten keine zusätzlichen Ablenkräfte von außen her einwirken.

Wie man den Fig. 1 und 2 weiterhin entnimmt, ist unmittelbar vor dem Röhrenboden 9 ein Markierungsträger 30 angeordnet, der in Richtung des Doppelpfeils F hin und her verschiebbar ist. In dem wiedergegebenen Ausführungsbeispiel weist dieser Markierungsträger eine Vielzahl von Markierungen 32 auf, die dadurch gebildet werden, daß am Markierungsträger 30 eine Vielzahl von geradlinigen magnetischen Bereichen vorgesehen ist, von denen jeder so angeordnet ist, daß die seinen magnetischen

Nordpol mit seinem magnetischen Südpol verbindende Gerade sich in Verschiebungsrichtung, d.h. in Richtung des Doppelpfeiles F erstreckt. In Bezug aufeinander sind diese magnetischen Bereiche so angeordnet, daß der magnetische Südpol eines Bereiches an den magnetischen Südpol des einen Nachbarbereiches und der magnetische Nordpol an den magnetischen Nordpol des anderen Nachbarbereiches unmittelbar anschließen. Die senkrechten Projektionen der Grenzflächen, in denen magnetische Südpole bzw. magnetische Nordpole der magnetischen Bereiche 33 aneinander angrenzen, auf den Röhrenboden 9 stellen die Markierungen 32 dar, deren Verschiebung in Richtung des Doppelpfeils F und deren in dieser Richtung gemessener Abstand von einer mit Hilfe der Elektronenstrahlröhre 1 vorgebbaren Referenzlinie gemessen werden kann. Darüber hinaus können mit Hilfe der erfindungsgemäßen Anordnung auch die Abstände zwischen jeweils zwei einander benachbarten Markierungen 32 mit sehr großer Genauigkeit gemessen werden, wie dies im folgenden noch erläutert wird.

Bei der in den Fig. 1 und 2 gezeigten Anordnung wird durch die Magnetfelder derjenigen magnetischen Bereiche 33, die sich vor dem Röhrenboden 9 befinden, überall dort, wo diese Magnetfelder nicht gleich Null sind, der Auftrefffleck 7 des Elektronenstrahls 4 von der Stelle des Röhrenbodens 9 weg verschoben, auf die er ohne das Vorhandensein des Markierungsträgers 30 auftreffen würde.

Unter der Voraussetzung, daß die Magnetfelder im magnetischen Bereiche 33 homogen sind, erfolgt diese Auslenkung des Auftreffflecks 7 ausschließlich in Y-Richtung ohne daß es zu einer Verschiebung seiner Lage in X-Richtung kommt.

Ordnet man also den Markierungsträger 30 so wie in den Fig. 1 und 2 gezeigt, in unmittelbarer Nähe des Röhrenbodens 9 an und steuert man die Ablenkplatten 6 so, daß sich der Auftrefffleck 7 in X-Richtung bewegt, so durchläuft er, wie in Fig. 2 gezeigt,nicht mehr eine der strichpunktierten Linie 10 folgende Bahn sondern eine in etwa sinusförmige Kurve 35, die die strichpunktierte Linie 10 genau dort schneidet, wo sich Markierungen 32 befinden. An diesen Stellen sind die vom Markierungsträger 30 bzw. den auf ihm angebrachten magnetischen Bereichen 33 erzeugten Magnetfelder gleich Null, so daß es hier zu keiner Auslenkung des Auftreffflecks 7 aus seiner durch die Ablenkplatten-Ansteuerung vorgegebenen Bahn kommt.

Nimmt man an, daß sich der Auftrefffleck 7 zunächst genau an der Stelle einer Markierung 32 befindet, so ist aufgrund der oben vorgegebenen Bedingung für die Ansteuerung der Y-Ablenkplatten bzw. der entsprechenden Korrekturspule die Differenz der in dieser Stellung des Auftreffflecks 7 über die beiden Elektroden 17, 18 abfließenden Ströme gleich Null. Hält man nun zunächst durch eine entsprechende Ansteuerung der Ablenkplatten 6 den Auftrefffleck 7 in X-Richtung fest und verschiebt man den Markierungsträger in Richtung des Doppelpfeils F nach links oder nach rechts, so wirken auf den Elektronenstrahl 4 vom Wert Null verschiedene Bereiche der durch den Markierungsträger 30 erzeugten Magnetfelder ein und der Auftrefffleck 7 wird in Y-Richtung entweder zur Elektrode 17 oder zur Elektrode 18 hin verschoben. Zu welcher Elektrode er hinverschoben wird, hängt davon ab, ob die Markierung 32, die sich in diesem Augenblick von ihm wegbewegt, eine von Südpolen oder von Nordpolen gebildete Markierung ist und cb sie sich nach links oder nach rechts weiter bewegt. In jedem Fall ändert sich die Differenz der über die beiden Elektroden 17, 18 ab fließenden Ströme und nimmt einen von Null verschiedenen Wert an, wobei man dann, wenn man weiß, ob die momentan verfolgte Markierung eine Nordpol/Nordpol-Markierung oder eine Südpol/Südpol-Markierung ist, aus dem Vorzeichen des entstehenden Differenzstromes auf die Verschiebungsrichtung des Maßstabes 30 schließen kann.

Entsprechendes gilt auch für das Vorzeichen der Ausgangsspannung $U_A$ des Differenzverstärkers 25, das vom Analog/Digital-Wandler 26 ebenso wie der Absolutbetrag dieser Spannung dem Rechner 12 zugeführt wird. Im Betriebszustand "Messen" wertet der Rechner 12 diese Information in der Weise aus, daß er ein neues Digitalwort ausgibt, das über den Digital/Analog-Wandler 14, den Ablenkverstärker 15 und die Ablenkplatten 6 dazu führt, daß der Auftrefffleck 7 der sich von ihm wegbewegenden Markierung 32 so lange nachgeführt wird, bis die Differenz der über die beiden Elektroden 17, 18 abfließenden Ströme und damit auch die Ausgangsspannung $U_A$ des Differenzverstärkers 25 wieder gleich Null ist. Der Nulldurchgang der Ausgangsspannung $U_A$ des Differenzverstärkers 25 läßt sich mit der erfindungsgemäßen Vorrichtung so steil gestalten, daß die Nachführung des Auftreffflecks 7 mit hoher Präzision erfolgt, so daß die Messungen mit einem sehr guten Auflösungsvermögen und,wenn man unten noch genauer beschriebene Kalibrierungs-Einrichtungen vorsieht, auch mit sehr hoher Genauigkeit durchgeführt werden können.

Für jede neue Lage, die eine derart verfolgte Markierung 32 einnimmt, muß der Rechner 12 aufgrund des eben beschriebenen Nachführvorganges ein neues Digitalwort ausgeben, das ein exaktes Maß für den momentanen Abstand der betrachteten Markierung 32 von einem beliebig auswählbaren, die Referenzlinie definierenden Punkt der strichpunktierten Linie 10 darstellt. Die Abstände der Markierungen 32 sind, wie man insbesondere der Fig. 2 entnimmt, so gewählt, daß sich in jeder Stellung des Markierungsträgers 30 wenigstens zwei Markierungen 32 vor dem Röhrenboden 9 befinden. Wandert also aufgrund einer entsprechend großen Verschiebung des Markierungsträgers 30 die Markierung 32, mit der der Rechner 12 den Auftrefffleck 7 gerade mitlaufen läßt, aus dem Bewegungsbereich des Auftreffflecks 7 heraus, so befindet sich immer mit Sicherheit eine weitere Markierung 32 in diesem Bewegungsbereich, die der Rechner 12 dadurch auffindet, daß er den Auftrefffleck 7 in X-Richtung entgegen der bisherigen Bewegungsrichtung so lange verschiebt, bis die Ausgangsspannung $U_A$ des Differenzverstärkers 25 wieder gleich Null geworden ist. Ist dieser Zustand erreicht, so gibt das vom Rechner 12 erzeugte neue Digitalwort wieder die genaue Lage der "neuen" Markierung 32 bezüglich der gewählten Referenzlinie an. Ist der Abstand dieser neuen Markierung 32 von der zuvor verfolgten Markierung 32 bekannt, so ist hierdurch auch der Abstand der zuvor verfolgten Markierung von der Referenzlinie weiterhin angebbar.

Es war oben bereits darauf hingewiesen worden, daß das eben beschriebene Meßverfahren nur dann einwandfrei arbeitet, wenn die den Auftrefffleck 7 auslenkenden Magnetfelder in X-Richtung homogen sind, weil sonst durch das Magnetfeld selbst auch eine X-Ablenkung des Auftreffflecks 7 bewirkt würde, was zur Folge hätte, daß das vom Rechner erzeugte X-Digital-Wort nicht mehr repräsentativ für die momentane tatsächliche X-Position des Auftreffflecks 7 wäre. Trotzdem ist es nicht erfor derlich, daß für jeden magnetischen Bereich 33 das von ihm erzeugte Magnetfeld in X-Richtung über seine gesamte Länge hinweg in hohem Maße homogen ist. Da gemäß der Erfindung die Meßwerte

immer dann erfaßt werden, wenn sich der Auftrefffleck 7 in unmittelbarer Nähe einer Markierung 32 befindet, die jeweils von der Grenzfläche zwischen zwei Nordpolen oder zwei Südpolen gebildet wird, sind hier die auf den Elektronenstrahl 4 einwirkenden Magnetfelder sowohl in X- als auch in Y-Richtung gleich Null und damit automatisch "homogen".

Die erfindungsgemäße Anordnung kann entweder als inkrementale oder als absolut arbeitende Meßvorrichtung verwendet werden. Im ersten Fall ist es erforderlich, daß die Markierungen 32 mit einer der gewünschten Meßgenauigkeit entsprechenden großen Genauigkeit und Regelmäßigkeit auf dem Markierungsträger 30 angeordnet sind. Dabei müssen die Abstände zwischen den Markierungen 32 der oben genannten Bedingung genügen, d.h. etwas kleiner als die Länge des Meßfensters sein, worunter die maximale Auslenkung des Auftrefflecks 7 in X-Richtung mit Hilfe der Ablenkplatten 6 verstanden wird. In diesem Fall läßt der Rechner 12 beim Einschalten der Anordnung den Meßfleck 7 zunächst einmal über die Länge des gesamten Meßfensters laufen. Aus den sich dabei ergebenden Vorzeichen der Ausgangsspannung $U_A$ des Differenzverstärkers 25 und der Anzahl der auftretenden Nulldurchgänge dieser Spannung kann der Rechner 12 erkennen, ob sich vor dem Meßfenster eine oder zwei Markierungen 32 befinden. Ist nur eine Markierung vor dem Meßfenster, so kann der Rechner 12 feststellen, ob es sich dabei um eine Nordpol/Nordpol-Markierung oder eine Südpol/Südpol-Markierung handelt. Sind zwei Markierungen vor dem Meßfenster angeordnet, so erkennt er, welche der beiden Markierungen die Nordpol/Nordpol-Markierung und welche die Südpol/Südpol-Markierung ist. In beiden Fällen steuert der Rechner 12 dann den Auftreffleck 7 so, daß die Ausgangsspannung $U_A$ des Differenzverstärkers 25 gleich Null wird, der Auftreffleck 7 sich also an der einen vor dem Meßfenster liegenden Markierung 32 oder an einer der beiden vor dem Meßfenster liegenden Markierungen befindet. Das Digitalwort, das der Rechner 12 erzeugen muß, um diese Stellung des Auftrefflecks 7 zu erzeugen, gibt dann den Abstand der betreffenden Markierung von einer gewählten Referenzlinie wieder. Setzt sich nun der Markierungsträger 30 in einer der beiden Richtungen des Doppelpfeiles F in Bewegung, hält der Rechner 12 den Auftreffleck 7 zunächst kurz an der bisherigen Stelle fest, um aus dem Vorzeichen der von Null abweichenden Ausgangsspannung $U_A$ des Differenzverstärkers 25 auf die Bewegungsrichtung des Markierungsträgers 30 schließen zu können. Nach dem Erfassen der Bewegungsrichtung bringt der Rechner 12 den Auftreffleck 7 wieder mit der Markierung zur Deckung ($U_A = 0$) und führt ihn mit dieser Markierung mit, solange sich diese innerhalb des Meßfensters bewegt. Kommt der Markierungsträger 30 zum Stillstand, bevor diese Markierung das Meßfenster verläßt, so gibt die Differenz zwischen dem ursprünglichen Digitalwort und dem nunmehr gewonnenen Digitalwort die Verschiebungsweite des Markierungsträgers wieder.

Durchläuft der Markierungsträger 30 eine größere Verschiebung, so muß wegen der oben genannten Bedingung eine neue Markierung 32 vor dem Meßfenster auftauchen, bevor die Markierung 32, an die der Auftreffleck 7 bisher "angeheftet" war, das Meßfenster verläßt. Kurz bevor die "alte" Markierung das Meßfenster verläßt, läßt dann der Rechner 12 den Auftreffleck 7 zur "neuen" Markierung zurücklaufen und verfolgt deren Bewegung in der gleichen Weise mit, wie dies eben für die "alte" Markierung beschrieben wurde. Dieser Vorgang kann so lange wiederholt werden, bis der Markierungsträger 30 in seiner neuen Lage zum Stillstand gekommen ist. Das Digitalwort, das der Rechner 12 in dieser neuen Ruhelage erzeugen muß, um den Auftreffleck 7 an der betreffenden Markierung 32 zu halten, gibt dann zusammen mit der Anzahl der am Meßfenster vorbeigelaufenen Markierungen und dem zu Beginn der Verschiebung erzeugten Digitalwort die Verschiebungsweite des Markierungsträgers 30 wieder.

Ist von vornherein klar, daß der Markierungsträger 30 eine Verschiebungsweite durchlaufen soll, die so groß ist, daß mehrere Markierungen am Meßfenster vorbeilaufen, was durch ein entsprechendes Signal angezeigt werden kann, so kann der Rechner 12 den Auftreffleck 7 auch zunächst in der Stellung festhalten, in der er zu Beginn der Verschiebungsbewegung mit einer Markierung zur Deckung gekommen ist. Aufgrund des Vorbeilaufens der magnetischen Bereiche 33 pendelt dann der Auftreffleck 7 in Y-Richtung auf und ab, wobei die Ausgangsspannung $U_A$ des Differenzverstärkers 25 immer dann einen Nulldurchgang aufweist, wenn sich eine Markierung 32 am Auftreffleck 7 vorbeibewegt. Die Anzahl der auftretenden Nulldurchgänge ist dann gleich der Zahl der vorbeigelaufenen Markierungen. Multipliziert man diese mit dem einheitlichen Abstand der Markierungen, so erhält man einen Grobmeßwert für die Verschiebungsweite. Ist dann der Markierungsträger 30 wieder zum Stillstand gekommen, so kann der Rechner 12 den Auftreffleck 7 der zuletzt vorbeigelaufenen Markierung 32 nachführen und mit dieser zur Deckung bringen. Es ergibt sich dann wieder das gleiche Digitalwort wie bei dem oben beschriebenen Verfahren, das in Verbindung mit dem Grobmeßwert die Gesamtverschiebungsweite darstellt.

Soll demgegenüber die erfindungsgemäße Anordnung als absolute Meßvorrichtung verwendet werden, so ist es zweckmäßig, daß sämtliche Abstände zwischen zueinander benachbarten Markierungen 32 voneinander verschieden sind. Außerdem werden sie so gewählt, daß in jeder Stellung des Markierungsträgers 30 sich wenigstens zwei Markierungen vor dem Meßfenster befinden.

Um mit einer solchen Anordnung mit hoher Genauigkeit messen zu können, werden mit Hilfe der erfindungsgemäßen Vorrichtung zunächst in einem Eichlauf, der zwischen den einzelnen Meßvorgängen auch wiederholt werden kann, sämtliche Abstände zwischen Nachbarmarkierungen ausgemessen und unter Beibehaltung der Zuordnung zu den jeweiligen Markierungspaaren abgespeichert. Befindet sich dann während des eigentlichen Meßbetriebes ein beliebiges Markierungspaar vor dem Meßfenster, so kann der Rechner 12 aus dem Abstand der beiden Markierungen erkennen, um welches Markierungspaar es sich handelt und somit auch die momentane Lage des Markierungsträgers 30 exakt bestimmen.

Alternativ hierzu ist es auch möglich, die auf dem Markierungsträger 30 angeordneten Markierungen 32 auf irgendeine andere Weise, beispielsweise durch Abzählen der Markierungen ausgehend von einer besonders gekennzeichneten Null-Markierung zu identifizieren und mit Hilfe des so gewonnenen Identifikationssignals die zugehörigen Abstände dieser Markierung zu ihren beiden Nachbarmarkierungen aus dem oben erwähnten Speicher abzurufen.

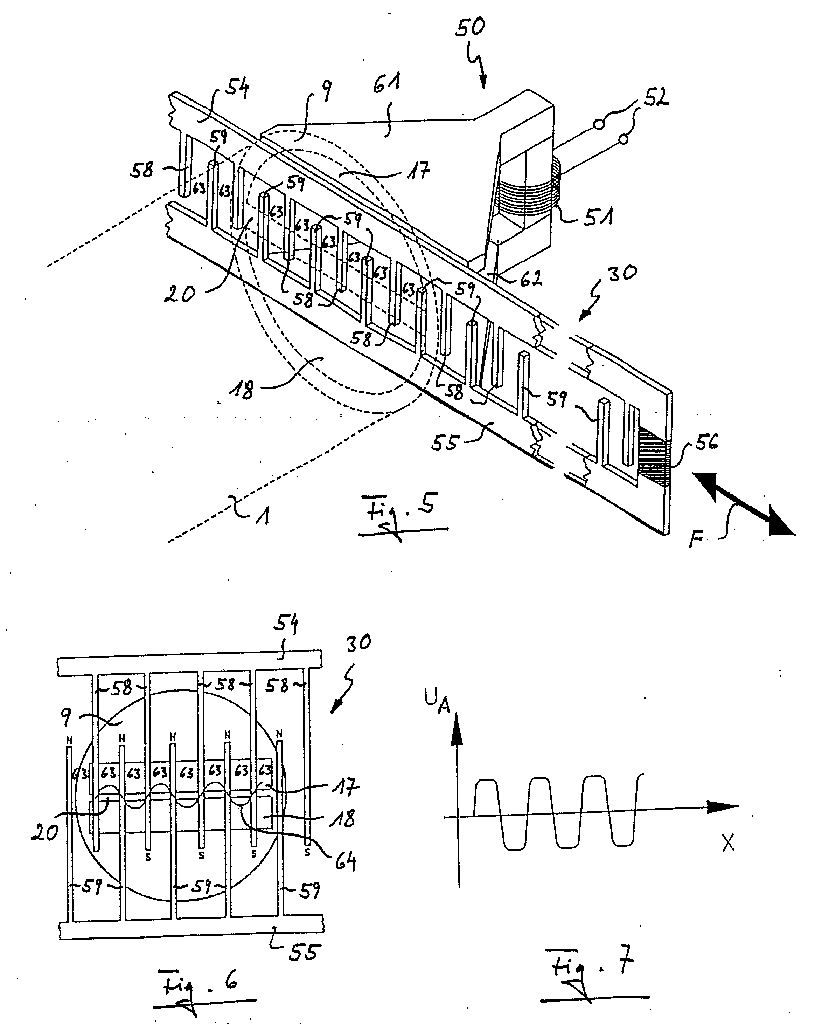

In Fig. 3 ist in einer der Fig. 2 entsprechenden Ansicht in vergrößertem Maßstab der Röhrenboden 9 einer abgewandelten Ausführungsform der erfindungsgemäßen Meßvorrichtung wiedergegeben, bei der die am Röhrenboden 9 auf der Innenseite der Röhre angebrachten Elektroden 17, 18 so ausgebildet sind, daß Drift- und Schwankungserscheinungen, die die strenge Korrelation zwischen den vom Rechner 12 abgegebenen Digitalwörtern und den entsprechenden Positionen des Auftreffflecks 7 auf dem Röhrenboden 9 stören könnten, mit Hilfe von Eich-Zyklen erfaßt und in ihrer Wirkung auf die Genauigkeit des Meßergebnisses eliminiert werden können.

Wie man der Fig. 3 entnimmt, umschließen die beiden Elektroden 17, 18 ebenfalls einen geradlinigen Meßspalt 20, in dem die wiedergegebene strichpunktierte Linie 10 die Bahn beschreibt, die der nicht dargestellte Auftrefffleck bei Ansteuerung der X-Ablenkplatten durchläuft, wenn von außen her keine Ablenkkräfte einwirken. Wie in den Fig. 1 und 2 sind die beiden Elektroden 17, 18 über symbolisch dargestellte Anschlußdrähte 22, 23 mit den beiden Eingängen eines Differenzverstärkers verbunden, der ein der Differenz zwischen den beiden über diese Elektroden 17, 18 abfließenden Strömen entsprechendes Ausgangssignal $U_A$ erzeugt.

Wie man der Fig. 3 entnimmt, muß der Meßspalt 20 nicht durch den Mittelpunkt des kreisförmigen Röhrenbodens 9 verlaufen. Es wird hier lediglich die Ablenkspannung für die Y-Ablenkplatten etwas anders gewählt, als bei dem Ausführungsbeispiel gemäß den Fig. 1 und 2.

Weiterhin ist der Fig. 3 zu entnehmen, daß die Elektrode 17 auf ihrer dem Meßspalt 20 gegenüberliegenden Längsseite in Längsrichtung des Meßspaltes 20 regelmäßig voneinander beabstandete sich in Y-Richtung erstreckende Vorsprünge 37 aufweist.

Die Elektrode 18 ist insgesamt etwa U-förmig ausgebildet und so angeordnet, daß sie mit der Innenseite ihres einen Schenkels 38 die untere Begrenzung des Meßspaltes 20 bildet.

Der die beiden Schenkel der Elektrode 18 miteinander verbindende Steg 39 erstreckt sich in Fig. 3 links von der Elektrode 17 in Y-Richtung nach oben. Der obere Schenkel 40 der Elektrode 18 verläuft parallel zum Meßspalt 20 mit einem solchen Abstand von der Elektrode 17, daß er die auf ihn zuweisenden Vorsprünge 37 der Elektrode 17 nicht berührt. An seiner der Elektrode 17 gegenüberliegenden Innenseite besitzt der Schenkel 40 eine Reihe von Vorsprüngen 42, deren Anzahl gleich der Anzahl der Vorsprünge 37 der Elektrode 17 ist. Die Vorsprünge 41 sind so angeordnet, daß sie sich vom Schenkel 40 weg zur Elektrode 17 hin in die Zwischenräume zwischen den Vorsprüngen 37 hineinerstrecken. In diesem Bereich bilden also die beiden Elektroden 17, 18 zwei ineinandergreifende kammartige Strukturen, die jedoch elektrisch vollständig voneinander getrennt sind.

Zur Durchführung einer Eichmessung wird zunächst dafür gesorgt, daß keine vom Markierungsträger der Meßanordnung ausgehenden Magnetfelder den Elektronenstrahl beeinflussen können. Werden die Magnetfelder des Markierungsträgers von Permanentmagneten erzeugt, so wird der Markierungsträger zu diesem Zweck genügend weit vom Röhrenboden 9 weggezogen. Werden diese Magnetfelder dagegen durch Elektromagneten erzeugt, wie dies weiter unten noch genauer beschrieben wird, so genügt es, den Erregerstrom abzuschalten.

In jedem Fall kann dann durch entsprechende Ansteuerung sowohl der X- als auch der Y-Ablenkplatten der Auftrefffleck auf einer durch die gestrichelte Linie 43 angedeuteten Bahn parallel zum Meßspalt 20 hin- und herbewegt werden. Dabei ergibt sich für den Auftrefffleck eine Vielzahl von am Röhrenboden 9 geometrisch genau definierten Stellungen, in denen er jeweils so in der Mitte zwischen einem nach oben weisenden Vorsprung 37 der Elektrode 17 und einem nach unten weisenden Vorsprung der Elektrode 18 steht, daß die Differenz der über die beiden Elektroden abfließenden Ströme gleich Null wird.

Für jede dieser geometrisch genau definierten Stellungen, die bei der Röhrenherstellung sehr exakt angebracht und vermessen werden können, ergibt sich dann ein diese Stellung beschreibendes X-Digitalwort. Somit wird eine eindeutige Zuordnung zwischen diesen Digitalwörtern und der Position des Auftreffflecks in X-Richtung auf dem Röhrenboden 9 hergestellt. Etwaige Nichtlinearitäten des Digital/Analog-Wandlers 14, Drifterscheinungen des Ablenkverstärkers 15 und temperaturbedingte Schwankungen der elektronenoptischen Ablenkgeometrie im Röhreninneren können somit immer wieder erfaßt werden. Der Röhrenboden 9 kann ohne besonderen Aufwand aus einem Glasmaterial hergestellt werden, das einen äußerst kleinen Temperatur-Ausdehnungskoeffizienten besitzt. Auch die Aufbringung der kammartigen Strukturen 37 und 42 der Elektroden 17 und 18 kann mit gängigen Fotolitographieverfahren mit einer sehr hohen Genauigkeit und einem sehr hohen Auflösungsvermögen ohne besonderen Kostenaufwand durchgeführt werden.

In Fig. 4 ist eine der Fig. 3 entsprechende Ansicht des Röhrenbodens 9 einer weiteren Ausführungsform der erfindungsgemäßen Meßanordnung wiedergegeben, die zur Messung von Winkelabständen bzw. von Winkelverschiebungen dient und ebenfalls eine zur Eichung und Nacheichung dienende Kammstruktur der Elektroden aufweist. Prinzipiell ist die Anordnung der Elektroden die gleiche wie beim bisher beschriebenen Ausführungsbeispiel, nur daß zur Erzeugung eines kreisringförmigen Meßspalts 20 auch die Elektroden 17 und 18 die Form von Kreisringen besitzen. Die hier kreisförmige strichpunktierte Linie 10 in der Mitte des Meßspaltes 20 beschreibt wieder die Bahn, die der Auftrefffleck durchläuft, wenn von außen her keine Ablenkkräfte einwirken. Es ist klar, daß bei einer Elektronenstrahlröhre mit einem solchen Röhrenboden 9 (ebenso wie beim Ausführungsbeispiel in Fig. 3) zwei Ablenkplatten-Paare vorhanden sein müssen, um den Auftrefffleck auf der kreisförmigen Bahn führen zu können.

Die Elektrode 17 besitzt in Fig. 4 auf ihrer vom Meßspalt 20 abgewandten Seite wieder eine Vielzahl von radial zur Mitte des Röhrenbodens hin verlaufenden Vorsprüngen 37, deren Winkelabstände bei der Herstellung der Elektronenstrahlröhre mit großer Genauigkeit und Gleichmäßigkeit vorgegeben werden. Radial innerhalb der Elektrode 17 ist hier eine Hilfs- oder Eichelektrode 45 angeordnet, die kreisringförmig ausgebildet ist und radial nach außen weisende Vorsprünge 41 besitzt, die in die Zwischenräume zwischen den Vorsprüngen 37 der Elektrode 17 hineinragen. Diese Hilfs- bzw. Eichelektrode 45 ist mit der äußeren Elektrode 18 über eine nicht dargestellte Leitung elektrisch leitend verbunden. Es liegen also auch hier zwei ineinander verzahnte Kammstrukturen vor, deren Funktionsweise die gleiche ist wie bei den entsprechenden Kammstrukturen aus Fig. 1. Der einzige Unterschied besteht darin, daß die Kammstrukturen aus Fig. 4 eine Eichung der Winkellage des Auftreffflecks ermöglichen, wenn er bei unwirksam gemachtem Markierungsträger längs der gestrichelten Linie 47 auf einer Kreisbahn geführt wird.

Ein Markierungsträger, der in Verbindung mit der in Fig. 4 gezeigten Elektrodenkonfiguration für Winkelmessungen bzw. Winkelverschiebungen geeignet ist, muß lediglich zwei magnetische Bereiche umfassen, von denen jeder halbkreisförmig ausgebildet ist und die so angeordnet sind, daß sie auf der einen Seite mit ihren Südpolen und auf der anderen Seite mit ihren Nordpolen aneinandergrenzen. Dieser Markierungsträger wird dann konzentrisch zum Mittelpunkt der Elektrodenkonfiguration aus Fig. 4 so angeordnet, daß die Projektionen der Nordpol/Nordpol- bzw. Südpol/Südpol-Grenzflächen auf dem Röhrenboden 9 radial verlaufen und dabei den Meßspalt 20 schneiden. Es ergeben sich somit zwei einander diametral gegenüberliegende Markierungen, deren Verdrehung bezüglich des gemeinsamen Zentrums in der gleichen Weise messend erfaßt und verfolgt werden kann, wie dies oben für Linearverschiebungen von Markierungen beschrieben wurde.

Alternativ hierzu kann gemäß der Erfindung ein mit der Elektrodenkonfiguration gemäß Fig. 4 verwendbarer Markierungsträger auch mehr als zwei magnetische Bereiche umfassen, die aber immer so angeordnet sind, daß sie einen geschlossenen Kreisring bilden, dessen Projektion den Meßspalt 20 überdeckt. Man erhält dann eine entsprechend große Anzahl von radial verlaufenden Markierungen, deren Winkelverschiebungen mit Hilfe des Abtastfleckes verfolgt und messend erfaßt werden können.

Es ist klar, daß auch in Fig. 4 die Elektroden 17 und 18 über entsprechende Leiter mit einem Differentialverstärker 25 verbunden sind. Von diesen Leitern sind in der Fig. 4 nur die Anschlußflecken 47 und 48 wiedergegeben.

Fig. 5 zeigt eine Ausführungsform der erfindungsgemäßen Vorrichtung, bei der die magnetischen Abschnitte des Maßstabs 33 nicht mit Hilfe von Dauermagneten sondern vermittels eines Elektromagneten 50 erzeugt werden, dessen Erregerspule 51 über Anschlüsse 52 mit einem entsprechenden Strom beaufschlagt werden kann.

In der Fig. 5, die den Maßstab 30 und den Elektromagneten 50 in perspektivischer Darstellung von der Elektronenstrahlröhre 1 her gesehen zeigt, ist die Elektronenstrahlröhre 1 mit dem Röhrenboden 9, den dort vorgesehenen Elektroden 17, 18 und dem von diesen umschlossenen geradlinigen Meßspalt 20 nur durch gestrichelte Linien angedeutet.

Wie man der Fig. 5 entnimmt, weist der in Richtung des Doppelpfeils F verschiebbare Maßstab 30 zwei sich in dieser Verschiebungsrichtung erstreckende, zueinander parallel verlaufende und voneinander quer zur Verschiebungsrichtung beabstandet angeordnete Schenkel 54, 55 auf, die aus einem Material hoher magnetischer Permeabilität, beispielsweise aus Mu-Metall bestehen und zumindest an beiden Enden, von denen in Fig. 5 nur eines dargestellt ist, durch ein Abstandsstück 56 zwar mechanisch miteinander verbunden, magnetisch aber voneinander getrennt sind.

Der obere Schenkel 54 des Maßstabes 30 besitzt eine Vielzahl von regelmäßig beabstandeten, sich zum unteren Schenkel 55 hin erstreckenden Vorsprüngen 58, während der untere Schenkel 55 eine gleich große Anzahl von regelmäßig beabstandeten, sich zum oberen Schenkel 54 hin erstrek-kenden Vorsprüngen 59 aufweist, die gegen die Vorsprünge 58 so versetzt angeordnet sind, daß sie deren Abstände jeweils halbieren.

Der Elektromagnet 50 besitzt zwei sich in horizontaler Richtung erstreckende Polschuhe 61, 62, die so angeordnet sind, daß ihre Stirnenden, die in Verschiebungsrichtung des Markierungsträgers 30 eine dem Durchmesser des Röhrenbodens 9 entsprechende Ausdehnung besitzen, von der Elektronenstrahlröhre 1 her gesehen unmittelbar hinter dem oberen Schenkel 54.bzw. dem unteren Schenkel 55 des Markierungsträgers 30 angeordnet sind. Dadurch bilden der obere Schenkel 54 und die von ihm ausgehenden, nach unten weisenden Vorsprünge 58 beispielsweise magnetische Südpole, während der untere Schenkel 55 und seine nach oben weisenden Vorsprünge 59 magnetische Nordpole darstellen. Somit ergeben sich zwischen einander benachbarten Vorsprüngen 58, 59 horizontal ausgerichtete magnetische Bereiche 63, die in ihrer Anordnung und Funktion den magnetischen Bereichen 33 aus den Fig. 1 und 2 entsprechen. Somit bildet also jeder der Vorsprünge 58, 59 eine den Markierungen 32 aus den Fig. 1 und 2 entsprechende Markierung.

Dies ist nochmals in Fig. 6 dargestellt, die den Markierungsträger 30 aus Fig. 5 mit dahinter liegendem Röhren boden 9 von dem hier weggelassenen Elektromagneten 50 her gesehen wiedergibt. Man erkennt auch hier wieder den oberen und den unteren Schenkel 54 bzw. 55 des Markierungsträgers 30 und die von diesen Schenkeln ausgehenden Vorsprünge 58 bzw. 59. Die auf dem Röhrenboden 9 angeordneten Elektroden 17, 18 besitzen hier die Form von sich in X-Richtung erstreckenden langgestreckten Rechtecken, die zwischen sich wieder einen geradlinigen Meßspalt 20 einschließen. Selbstverständlich kann auch bei dieser Aus-führungsform eine Eichelektroden-Struktur vorgese-hen werden, wie sie oben unter Bezugnahme auf Fig. 3 beschrieben wurde. Schließlich ist in Fig. 6 noch die sinusförmige Bewegungsbahn 64 dargestellt, die der Auftrefffleck durchläuft, wenn er in Anwesenheit des gezeigten Markierungsträgers 30 über die gesamte Meßfenster-Strecke hinweg in X-Richtung bewegt wird. Man sieht, daß der Auftrefffleck 7 an jedem der Vorsprünge 58, 59 die Mittellinie des Meßspaltes 20 überquert. Dies hat zur Folge, daß das in Fig. 7 gezeigte Ausgangssignal UA des Differenzverstärkers 25 an diesen Stellen einen sehr steilen Nulldurchgang aufweist, der somit exakt einem Digitalwort des Rechners 12 zugeordnet werden kann. Das Ausgangssignal UA ist allerdings nicht sinusförmig sondern weist im Bereich seiner oberen und unteren Scheitel Abflachungen auf. Diese Signalbegrenzung kommt dadurch zustande, daß der Absolutbetrag der Differenz zwischen den beiden über die Elektroden 17, 18 abfließenden Ströme nicht mehr weiter wachsen kann, wenn der Auftrefffleck so weit in Richtung der einen oder der anderen Elektrode in Y-Richtung ausgelenkt ist, daß der gesamte Elektronenstrahl-Strom nur noch über eine der beiden Elektroden abfließt.

Die Erzeugung der magnetischen Bereiche 63 mit Hilfe eines Elektromagneten hat den Vorteil, daß der Einfluß von elektromagnetischen Störfeldern dadurch erkannt und erfaßt werden kann, daß der Strom durch die Erregerspule 51 abgeschaltet bzw. umgepolt wird. Auch bei den oben beschriebenen Anfangs- und Eichmessungen ist es dann nicht erforderlich, den Maßstab 30 vom Röhrenboden 9 zu entfernen, da es genügt, für diese Fälle den Erregerstrom des Elektromagneten 50 abzuschalten.

Vorzugsweise werden die Vorsprünge 58, 59 nicht frei vorstehend angeordnet sondern in ein nichtmagnetisierbares Material mit möglichst kleinem Temperaturkoeffizienten eingebettet, so daß eine Verschiebung der durch diese Vorsprünge de-finierten Markierungen aufgrund von Temperatur-einflüssen verhindert wird.

Eine weitere Möglichkeit, die magnetischen Bereiche 33 bzw. 63 mit Hilfe von Elektromagneten zu erzeugen, besteht darin, eine sich in Längsrichtung des Maßstabes 30 erstreckende elektrisch durchgehende, d.h. von einem einzigen Erregerstrom durchflossene Leiterwicklung vorzusehen, deren Wicklungssinn sich abschnittsweise ändert, so daß abwechselnd aneinander angrenzende magnetische Süd- und Nordpole entstehen. Auch diese Spule kann in ein Trägermaterial mit möglichst kleinem Temperaturkoeffizienten eingebettet werden. Auch sie ermöglicht ein Abschalten bzw. Umpolen des Erregerstroms, so daß die Anfangs- und Eichmessungen vereinfacht durchgeführt und Störeinflüsse von von außen kommenden Magnetfeldern erkannt werden können.

Die Erzeugung der magnetischen Abschnitte 33 bzw. 63 mit Hilfe eines oder mehrerer Elektromagneten ist erfindungsgemäß nicht nur bei geradlinigen Meßspalten 20 sondern auch bei jeder anderen Form, insbesondere bei der in Fig. 4 wiedergegebenen Kreisform für einen Winkelmesser möglich.

**Ansprüche**

1. Meßanordnung zur Bestimmung des Abstandes, den eine an einem Körper angebrachte Markierung von einer Referenzlinie aufweist, mit einer den Bezug zur Referenzlinie herstellenden Elektronenstrahlröhre, deren Ablenkeinheit so angesteuert wird, daß der Auftrefffleck des Elektronenstrahls auf dem Röhrenboden eine vorgebbare Bahnkurve durchläuft, wobei der die Markierung tragende Körper in unmittelbarer Nähe der Elektronenstrahlröhre angeordnet und gegen diese verschiebbar ist, dadurch **gekennzeichnet,**
daß auf dem Röhrenboden (9) an der Innenseite wenigstens zwei durch einen Meßspalt (20) elektrisch voneinander getrennte Elektroden (17, 18) vorgesehen sind,
daß die Abmessung des Auftreffflecks (7) quer zum Meßspalt (20) wenigstens gleich der Breite des Meßspaltes (20) ist,
daß die Ablenkeinheit (6, 6) der Elektronenstrahlröhre (1) so angesteuert wird, daß sich der Auftrefffleck (7) des Elektronenstrahls (4) dann, wenn von außen keine Beeinflussung vorhanden ist, so längs des Meßspaltes (20) bewegt, daß die Differenz der vom Elektronenstrahl (4) hervorgerufenen, über die beiden Elektroden (17, 18) abgeführten Ströme ($I_{17}$, $I_{18}$) einen vorgebbaren Wert besitzt,
daß der die wenigstens eine Markierung (32) tragende Körper (30) zumindest in dem Bereich, mit dem er sich bei seiner Verschiebung an der Elektronenstrahlröhre (1) entlangbewegt, so ausgebildet ist, daß er einen sich mit der relativen Lage des Körpers (30) bezüglich der Elektronenstrahlröhre (1) ändernden Einfluß auf den Elektronenstrahl (4) ausübt, durch den der Auftrefffleck (7) quer zur Längsrichtung des Meßspaltes (20) verschoben wird.

2. Meßanordnung nach Anspruch 1, dadurch **gekennzeichnet,** daß der Einfluß auf den Elektronenstrahl (4) mit Hilfe eines Magnetfeldes ausgeübt wird.

3. Meßanordnung nach Anspruch 2, dadurch **gekennzeichnet,** daß an dem Körper (30) sich in Richtung seiner Verschiebung erstreckende magnetische Bereiche (33) ausgebildet und so angeordnet sind, daß wechselweise jeweils zwei Nordpol-Enden und zwei Südpol-Enden aneinander angrenzen.

4. Meßanordnung nach Anspruch 3, dadurch **gekennzeichnet,** daß die magnetischen Bereiche (33) von Permanent-Magneten gebildet werden.

5. Meßanordnung nach Anspruch 3, dadurch **gekennzeichnet,** daß die magnetischen Bereiche (33) von elektrischen Wicklungen gebildet werden, die mit wechselndem Wicklungssinn elektrisch miteinander in Reihe liegen und von ein und demselben Erregerstrom durchflossen werden.

6. Meßanordnung nach Anspruch 3, dadurch **gekennzeichnet,** daß die magnetischen Bereiche (33) von zwei ineinander verzahnten kammförmigen Strukturen (54, 58; 55, 59) aus einem Material hoher magnetischer Permeabilität gebildet werden, von denen die eine mit dem einen Pol und die andere mit dem anderen Pol eines Elektromagneten (50) in magnetisch leitender Verbindung steht.

7. Meßanordnung nach Anspruch 1, dadurch **gekennzeichnet,** daß der Einfluß auf den Elektronenstrahl (4) mit Hilfe eines elektrischen Feldes ausgeübt wird.

8. Meßanordnung nach Anspruch 7, dadurch **gekennzeichnet,** daß an dem Körper (30) in Richtung seiner Verschiebung aufeinanderfolgende Bereiche mit abwechselnd elektrisch positiver und elektrisch negativer Polung bezüglich einer in der Nähe der Elektronenstrahlröhre (1) angeordneten Masseplatte vorgesehen sind.

9. Meßanordnung nach einem der vorhergehenden Ansprüche, dadurch **gekennzeichnet,** daß der Meßspalt (20) zwischen den wenigstens zwei Elektroden (17, 18) geradlinig ausgebildet ist.

10. Meßanordnung nach einem der Ansprüche 1 bis 6, dadurch **gekennzeichnet,** daß der Meßspalt (20) zwischen den wenigstens zwei Elektroden (17, 18) kreisförmig ausgebildet ist.

11. Meßanordnung nach einem der vorhergehenden Ansprüche, dadurch **gekennzeichnet,** daß auf dem Röhrenboden (9) eine Eichelektroden-Struktur (17, 37; 40, 42) vorgesehen ist.

12. Meßanordnung nach Anspruch 11, dadurch **gekennzeichnet,** daß die Eichelektroden-Struktur von zwei kammartigen Elektroden (17, 37; 40, 42) gebildet wird, die so ineinander verzahnt sind, daß der Spalt, der sie elektrisch voneinander trennt, quer zu seiner Haupterstreckungsrichtung, die parallel zur Längsrichtung des Meßspaltes (20) verläuft, mäanderförmige Schleifen bildet, bei deren Überstreichen durch den Auftrefffleck (7) jeweils an geometrisch genau definierten Stellen die Differenz der vom Elektronenstrahl (4) hervorgerufenen, über die beiden Elektroden (17, 40) der Eichelektrodenstruktur abgeführten Ströme gleich einem vorgebbaren Wert wird.

13. Meßanordnung nach Anspruch 12, dadurch **gekennzeichnet,** daß von den beiden Elektroden (17, 40) der Eichelektrodenstruktur die eine mit der einen den Meßspalt (20) begrenzenden Elektrode (17) und die andere mit der anderen den Meßspalt (20) begrenzenden Elektrode (18) elektrisch leitend verbunden ist.

14. Meßanordnung nach einem der Ansprüche 1 bis 13, dadurch **gekennzeichnet**, daß der vorgebbare Wert für die Differenz der über die beiden Elektroden (17, 18 bzw. 17, 40) abfließenden Ströme gleich Null ist.

13

Fig. 1

Fig. 2

Fig. 3

Fig. 4

50

54  9  61

58

59

63  63

59

20

59

63  63  59

63

63

58

18

58

58

52

51

62

59

59

30

55

59

56

1

F

Fig. 5

54

30

58  58  58

9

N  N  N  N  N

63  63  63  63  63  63  63  63

17

18

20

64

S  S  S  S

59  59  59

55

Fig. 6

$U_A$

X

Fig. 7

# EUROPÄISCHER RECHERCHENBERICHT

## EINSCHLÄGIGE DOKUMENTE

EP 89117470.8

| Kategorie | Kennzeichnung des Dokuments mit Angabe, soweit erforderlich, der maßgeblichen Teile | Betrifft Anspruch | KLASSIFIKATION DER ANMELDUNG (Int. Cl. 4) |
|---|---|---|---|
| D,A | DE - A1 - 3 608 884 (MITEC) * Fig. 1; Zusammenfassung * ---- | 1 | G 01 D 5/48 |

|  | RECHERCHIERTE SACHGEBIETE (Int. Cl.4) |
|---|---|
|  | G 01 B 11/00 G 01 D 5/00 |

Der vorliegende Recherchenbericht wurde für alle Patentansprüche erstellt.

| Recherchenort | Abschlußdatum der Recherche | Prüfer |
|---|---|---|
| WIEN | 30-11-1989 | KUNZE |